# EUROPÄISCHE PATENTANMELDUNG

(11) **EP 4 778 375 A1**
(43) Veröffentlichungstag der Anmeldung: **22.07.2026**
(21) Anmeldenummer: 25216829.9
(22) Anmeldetag: 19.11.2025
(51) Int. Cl.: A01B 79/00, A01B 69/04, A01D 78/10

(54) **PLANUNGSSYSTEM**

(30) Priorität: 20.01.2025 DE 102025101859
(71) Anmelder: CLAAS Saulgau GmbH, 88340 Bad Saulgau (DE)
(72) Erfinder: Rupp, Magnus, 73494 Rosenberg (DE); Mock, Andreas, 88284 Wolpertswende (DE); Fischer, Josef, 88400 Biberach (DE); Speer, Christian, 78267 Aach (DE); Monkenbusch, Robin, 33378 Rheda-Wiedenbrück (DE); Schmitt, Mathias, 78576 Emmingen-Liptingen (DE); Spieler, Raphael, 88339 Bad Waldsee (DE); Frick, Clemens, 88356 Ostrach (DE)
(74) Vertreter: CLAAS Gruppe

(57) **Zusammenfassung**

Die vorliegende Erfindung betrifft ein Planungssystem (1), welches zur Generierung eines Ablaufplanes (6) zur Durchführung eines durch zumindest ein autonomes Gespann (11) aus einem autonomen Arbeitsfahrzeug (12) und wenigstens einer daran adaptierten Schwadvorrichtung (13) auszuführenden Schwadprozesses eingerichtet ist, wobei das Planungssystem (1) eine Benutzerschnittstelle (2), eine Kommunikationseinheit (3), eine Recheneinheit (4) und eine Speichereinheit (5) umfasst, wobei das Planungssystem (1) dazu eingerichtet ist, zur Generierung des Ablaufplanes (6) die Benutzerschnittstelle (2) anzusteuern, um dialogbasierend zumindest eine vorgebbare Randbedingung (15) für den prädiktiv zu planenden Schwadprozess zu bestimmen, sowie die Kommunikationseinheit (3) anzusteuern, um Informationen (17) zum durch den zu planenden Schwadprozess zu bearbeitenden Erntegut (20, 23) sowie Umgebungsbedingungen (18) von zumindest einer zur Bereitstellung der Informationen (17) und Umgebungsbedingungen (18) eingerichteten Datenquelle (7) abzufragen, wobei die Recheneinheit (4) dazu eingerichtet ist, durch Ausführung zumindest eines in der Speichereinheit (5) hinterlegten Algorithmus (8) den Ablaufplan (6) in Abhängigkeit von der zumindest einen vorgegebenen Randbedingung (15) sowie den abgefragten Informationen (17) und Umgebungsbedingungen (18) zu generieren und an das zumindest eine autonome Gespann (11) zu übertragen.

## Beschreibung

Die vorliegende Erfindung betrifft ein Planungssystem gemäß dem Oberbegriff des Anspruches 1.

Planungssysteme sind bereits aus dem Stand der Technik bekannt. Beispielhaft wird auf die DE 10 2006 015 204 A1 verwiesen, in welcher die Zusammenarbeit von Mähdreschern auf einem zu bearbeitenden Territorium offenbart ist. Für die Mähdrescher wird ein gemeinsam abzuarbeitender Routenplan generiert, wobei sichergestellt werden soll, dass jeder Bereich des zu bearbeitenden Territoriums von jeweils nur einem Mähdrescher bearbeitet wird.

Im Unterschied zur Einsatzsteuerung beim Ernten von Erntegut durch Mähdrescher erfordert der Prozess der Ernte von Futtermittel eine aufwendigere Planung, da der Vorgang des Erntens von Futtermittel mehrere Teilprozesse umfasst, die zeitlich versetzt nacheinander durchgeführt werden und zu deren Durchführung unterschiedliche landwirtschaftliche Arbeitsfahrzeuge und/oder Anbaugeräte zum Einsatz kommen.

Ausgehend vom vorstehend genannten Stand der Technik liegt der Erfindung die Aufgabe zugrunde, ein Planungssystem der eingangs genannten Art weiterzubilden, welches eine einfach zu handhabende, durch Benutzereingaben beeinflussbare Generierung eines Ablaufplanes zur Durchführung eines Schwadprozesses ermöglicht.

Diese Aufgabe wird aus vorrichtungstechnischer Sicht ausgehend vom Oberbegriff des Anspruches 1 durch ein Planungssystem mit den kennzeichnenden Merkmalen des Anspruches 1 gelöst. Vorteilhafte Weiterbildungen sind Gegenstand der abhängigen Ansprüche.

Gemäß dem Anspruch 1 wird ein Planungssystem vorgeschlagen, welches zur Generierung eines Ablaufplanes zur Durchführung eines durch zumindest ein autonomes Gespann aus einem autonomen Arbeitsfahrzeug und wenigstens einer daran adaptierten Schwadvorrichtung auszuführenden Schwadprozesses eingerichtet ist, wobei das Planungssystem eine Benutzerschnittstelle, eine Kommunikationseinheit, eine Recheneinheit und eine Speichereinheit umfasst. Erfindungsgemäß ist vorgesehen, dass das Planungssystem dazu eingerichtet ist, zur Generierung des Ablaufplanes die Benutzerschnittstelle anzusteuern, um dialogbasierend zumindest eine vorgebbare Randbedingung für den prädiktiv zu planenden Schwadprozess zu bestimmen, sowie die Kommunikationseinheit anzusteuern, um Informationen zum durch den zu planenden Schwadprozess zu bearbeitenden Erntegut sowie Umgebungsbedingungen von zumindest einer zur Bereitstellung der Informationen und Umgebungsbedingungen eingerichteten Datenquelle abzufragen, und dass die Recheneinheit dazu eingerichtet ist, durch Ausführung zumindest eines in der Speichereinheit hinterlegten Algorithmus den Ablaufplan in Abhängigkeit von der zumindest einen vorgegebenen Randbedingung sowie den abgefragten Informationen und Umgebungsbedingungen zu generieren und an das zumindest eine autonome Gespann zu übertragen.

Wesentlich ist die Überlegung, dass auch eine Bedienperson, die wenig Erfahrung mit der Planung und den hierfür erforderlichen Abläufen eines Schwadprozesses und den Anforderungen an den herzustellenden Schwad hat, in die Lage versetzt wird, einen prädiktiven Ablaufplan zu generieren, welcher die gestellten Anforderungen an die Qualität des aus gemähtem Erntegut herzustellenden Schwads sowie die logistischen Anforderungen zur Durchführung des Schwadprozesses unter Berücksichtigung, d.h. in Abhängigkeit von, der zumindest einen vorgegebenen Randbedingung sowie der abgefragten Informationen und Umgebungsbedingungen erfüllen kann. Der prädiktiv generierte Ablaufplan enthält die für die Durchführung des Schwadprozesses erforderlichen Einstellparameter. Die Einstellparameter ermöglichen eine optimierte und effiziente Durchführung des Schwadprozesses durch das zumindest eine autonome Gespann in Abhängigkeit von der zumindest einen vorgegebenen Randbedingung sowie der abgefragten Informationen und Umgebungsbedingungen.

Im generierten Ablaufplan enthaltene Einstellparameter für das zumindest eine autonome Gespann sind unter anderem Fahrtroute, Fahrgassen, Fahrgeschwindigkeit, Einstellungen der Schwadvorrichtung, Einsatzdauer, Ressourcenverbrauch und dergleichen. Einstellungen der Schwadvorrichtung sind insbesondere Arbeitshöhe und Arbeitsbreite.

Die dialogbasierende Interaktion zwischen dem Planungssystem und dem Bediener mittels der Benutzerschnittstelle ermöglicht es dem Bediener des Planungssystems auf einfache Weise, die zumindest eine Randbedingung zu bestimmen, die in dem prädiktiv zu generierenden Ablaufplan berücksichtigt werden soll.

Bei der zumindest einen Randbedingung, die vom Bediener des Planungssystems vorgegeben wird, kann es sich beispielsweise um die geplante spätere Verwendung des durch das autonome Gespann zu erzeugenden Schwads, beispielsweise das Einbringen des durch einen selbstfahrenden Feldhäcksler aufgenommenen und verarbeiteten und auf einen Ladewagen überladenen Schwads in ein Silo oder die Erzeugung von Erntegutballen mittels einer Ballenpresse, und/oder die Art und Arbeitsweise der für den späteren Verwendungszweck zum Einsatz kommende Arbeitsmaschine handeln. Alternativ oder zusätzlich kann die zumindest eine Randbedingung die geplante Qualität bzw. der Energiegehalt und/oder die Geometrie des durch das zumindest eine autonome Gespann zu erzeugenden Schwads sein, die mittels der Benutzerschnittstelle durch den Bediener vorgebbar ist. Weiterhin kann die zumindest eine vorgebbare Randbedingung die Minimierung der Anzahl an Leerfahrten und/oder Überfahrten durch nachfolgende Arbeitsmaschinen und/oder eine spezifische Funktionalität der Schwadvorrichtung wie die Teleskopierbarkeit von Schwadkreiseln der Schwadvorrichtung sein.

Informationen zum durch den zu planenden Schwadprozess zu bearbeitenden Erntegut, die durch die zumindest eine Datenquelle bereitgestellt werden, können aktueller Ertrag, Feuchtigkeit, Verschmutzungsgrad und/oder Inhaltsstoffe des zum Schwad zu formenden Erntegutes und/oder die Halmausrichtung des abgemähten Erntegutes auf dem zu bearbeitenden Feld sein.

Umgebungsbedingungen können historische und/oder prognostizierte Wetterdaten, topografische Daten des zu bearbeitenden Feldes, bereits bestehende Fahrtrouten und/oder historische und/oder aktuelle Ertragsdaten für das Erntegut des zu bearbeitenden Feldes sein. Bei der zu planenden Lage und/oder Geometrie des Schwads wird auch eine bestehende Hanglage berücksichtigt.

Das erfindungsgemäße Planungssystem führt die zumindest eine Randbedingung, die Informationen zum Erntegut sowie die Umgebungsbedingungen zusammen, um im Ergebnis mittels des Algorithmus einen Ablaufplan für die Durchführung des Schwadprozesses zu generieren, der eine optimale Fahrtroute umfasst, entlang der sich das zumindest eine autonome Gespann zur Durchführung des Schwadprozesses selbsttätig bewegt, um den Schwad bzw. die Schwaden zu erzeugen. Der Ablaufplan umfasst darüber hinaus eine optimierte Ablageposition des Schwads. Zudem werden eine optimale Einstellung der Komponenten der Schwadvorrichtung und/oder des autonomen Arbeitsfahrzeugs sowie der optimale Schwadzeitpunkt bestimmt und in dem Ablaufplan hinterlegt, welcher von dem zumindest einen autonomen Gespann zur Durchführung des Schwadprozesses verwendet wird.

Ein weiterer Aspekt besteht in einer Vorauswahl der Zusammensetzung des zumindest einen autonomen Gespanns durch das Planungssystem. Das Planungssystem kann hierzu einen Vorschlag unterbreiten, welches autonome Arbeitsfahrzeug und/oder welche Schwadvorrichtung in Abhängigkeit bzw. unter Berücksichtigung von der zumindest einen Randbedingung, den Informationen und den Umgebungsbedingungen sinnvollerweise einsetzbar ist bzw. ein optimales Ergebnis erwarten lässt. Weiterhin kann das Planungssystem entsprechend der abgerufenen Umgebungsbedingungen, wie beispielsweise der Größe des zu bearbeitenden Feldes und/oder der prognostizierten Witterungsbedingungen, den Einsatz von zwei oder mehr autonomen Gespannen vorschlagen.

Im Ergebnis soll das abgemähte Erntegut durch die Schwadvorrichtung schonend und zum bestmöglichen Zeitpunkt zum Schwad zusammengeführt werden. Zudem soll eine geringstmögliche Futterverschmutzung erreicht werden, was als Abstimmungsprozess beim Zurücklassen von Erntegut zur Vermeidung von Verschmutzung durch die Aufnahme von Bodenmaterial zu verstehen ist. Außerdem kann eine auf nachfolgende Arbeitsprozesse optimiert abgestimmte Ablage des Schwads ein weiteres Ergebnis der Generierung der Ablaufplanung durch das Planungssystem sein.

Die Teleskopierbarkeit von Schwadkreiseln der Schwadvorrichtung ermöglicht es dem einen autonomen Gespann beispielsweise, Hindernissen auf dem zu bearbeitenden Feld gegebenenfalls ohne signifikante Abweichung von der geplanten Fahrtroute gemäß dem Ablaufplan auszuweichen. Weitere Aspekte der Teleskopierbarkeit von Schwadkreiseln der Schwadvorrichtung sind die Variation der Schwadbreite, um diese an eine Arbeitsbreite einer nachfolgend den Schwad bearbeitenden oder aufnehmenden Arbeitsmaschine anpassen zu können. Die von dem Ablaufplan vorgegebene Fahrtroute umfasst Kurvenfahrten, so dass die Schwadvorrichtung vor dem Erreichen von Kurven proaktiv eingestellt werden kann. Diese proaktive Ansteuerung kann vorzugsweise im Ablaufplan hinterlegt sein.

Die Schwadvorrichtung kann als Kreiselschwader, Sternradschwader, Rotorschwader, Pick-Up-Bandschwader, Kammschwader und/oder Bandrechschwader ausgeführt sein.

Insbesondere kann die Recheneinheit zur Abarbeitung zumindest einer in der Speichereinheit hinterlegten Vorschlagsroutine eingerichtet sein, welche in Abhängigkeit von der zumindest einen vorgebbaren Randbedingung sowie den Informationen und Umgebungsbedingungen zumindest eine durch die Benutzerschnittstelle auswählbare Vorschlagssequenz für eine optimierte Ablageposition des Schwads durch das zumindest eine autonome Gespann und die hierfür erforderlichen optimierten Einstellparameter generiert. Insbesondere die durch die Kommunikationseinheit aus der wenigstens einen Datenquelle abgerufenen Inhaltsstoffe des zum Schwad zu formenden Erntegutes und/oder die Halmausrichtung des abgemähten Erntegutes auf dem zu bearbeitenden Feld können von dem Planungssystem verwendet werden, um eine optimierte Ablageposition für den Schwad vorzuschlagen. Eine dem Vorschlag zur Ablageposition zugrundeliegende Zielstellung ist dabei, einen möglichst homogenen Schwad zu erzeugen.

Bevorzugt kann das Planungssystem dazu eingerichtet sein, auf wenigstens einen Ablaufplan eines in der Vergangenheit liegenden Planungsvorgangs und/oder Daten zumindest einer in der Vergangenheit liegenden spezifischen Feldbearbeitung und/oder vollständigen Erntekampagne zuzugreifen und dem zu generierenden Ablaufplan als Basisdaten zugrunde zu legen. Der Zugriff auf wenigstens einen historischen Ablaufplan und/oder Daten zumindest einer in der Vergangenheit liegenden spezifischen Feldbearbeitung und/oder vollständigen Erntekampagne ermöglichen die Prädiktion der Einstellparameter für das zumindest eine autonome Gespann. Entsprechend kann auch auf frühere Fahrtrouten zurückgegriffen werden, die von autonomen und/oder bemannten Gespannen und/oder anderen Arbeitsmaschinen in der Vergangenheit auf dem Feldabgefahren wurden.

Gemäß einer Weiterbildung kann das Planungssystem dazu eingerichtet sein, bei der Generierung des Ablaufplanes dem Schwadprozess vorbereitend vorangehende Arbeitsprozesse und dem Schwadprozess nachfolgend auszuführende Arbeitsprozesse zu berücksichtigen. Aus zumindest einem dem Schwadprozess vorangehenden Arbeitsprozess können dem Planungssystem Informationen zum Erntegut durch den zu planenden Schwadprozess zu bearbeitenden Erntegut bereitgestellt werden. Weiterhin ermöglicht die Berücksichtigung von zumindest einem vorangehenden, den Schwadprozess vorbereitenden Arbeitsprozess, wie das Mähen oder das Wenden, eine Vorfeldprädiktion durch die den vorangehenden Arbeitsprozess ausführende Arbeitsmaschine. Dabei können von zumindest einer Sensoreinheit der Arbeitsmaschine, die den vorangehenden Arbeitsprozess ausgeführt hat, Informationen zum Erntegut sowie der durch die Arbeitsmaschine abgefahrenen Fahrtroute erfasst und bereitgestellt werden, die vom Planungssystem berücksichtigt werden können. Des Weiteren können von zumindest einer weiteren Sensoreinheit der Arbeitsmaschine im Zeitpunkt der Ausführung des vorangehenden Arbeitsprozesses bestehende Umgebungsbedingungen erfasst und bereitgestellt werden.

Hierzu kann das Planungssystem dazu eingerichtet sein, Informationen und/oder Umgebungsbedingungen von zumindest einer einen vorangehenden Arbeitsprozess ausführenden bemannten und/oder autonomen Arbeitsmaschine als eine Datenquelle abzurufen und zu empfangen.

Zusätzlich oder alternativ kann das Planungssystem dazu eingerichtet sein, Informationen zum Erntegut und/oder Umgebungsbedingungen von einem externen Datenverarbeitungssystem, insbesondere einem Farm-Managementsystem, als eine Datenquelle abzurufen und zu empfangen.

Bevorzugt kann das Planungssystem dazu eingerichtet sein, Informationen zum Erntegut und/oder Umgebungsbedingungen von zumindest einer dem autonomen Gespann zugeordneten Sensoranordnung zu empfangen und auszuwerten. Die zumindest eine Sensoranordnung kann dazu eingerichtet sein, den Verschmutzungsgrad im Schwad zu detektieren und/oder eine Bearbeitungstiefe der Schwadvorrichtung zu bestimmen, um zu vermeiden, dass durch eine zu große Bearbeitungstiefe der Schwadvorrichtung Verunreinigungen in das Schwad eingebracht werden. Alternativ oder zusätzlich kann die zumindest eine Sensoranordnung dazu eingerichtet sein, die Ablageposition und/oder die Ablageform des Schwads zu bestimmen.

Gemäß einer bevorzugten Weiterbildung kann das Planungssystem dazu eingerichtet sein, bei einem zeitgleichen Einsatz von zumindest zwei autonomen Gespannen zum Erzeugen von Einzelschwaden entlang einer gemeinsamen Fahrtroute, Teilfahrtrouten in Abhängigkeit von einer durch Zusammenfassen der Einzelschwaden gebildeten Gesamtschwadposition aufeinander abzustimmen.

Hierbei kann das Planungssystem dazu eingerichtet sein, die Lage der Gesamtschwadposition vorzuschlagen und mittels der Benutzerschnittstelle auszugeben, wobei die Benutzerschnittstelle dazu eingerichtet ist, Eingaben eines Bedieners zur Veränderung der vorgeschlagenen Lage der Gesamtschwadposition umzusetzen. Die Eingabe zur Umsetzung einer Veränderung der vorgeschlagenen Lage der Gesamtschwadposition durch den Bediener kann bevorzugt mittels einer berührungssensitive Bildschirmoberfläche der Benutzerschnittstelle erfolgen. Der Bediener kann dabei die visualisierte vorgeschlagene Lage der Gesamtschwadposition durch Verschieben verändern.

Weiterhin kann das Planungssystem dazu eingerichtet sein, einen Ressourcenverbrauch in Abhängigkeit von der jeweiligen ausgewählten und/oder eingestellten Lage der Gesamtschwadposition auszugeben. Der Bediener des Planungssystems kann somit unmittelbar die Auswirkungen der manuellen Änderung der Lage der Gesamtschwadposition von einer vorschlagsgemäßen Lage erkennen.

Bevorzugt kann das Planungssystem dazu eingerichtet sein, eine Simulation von in dem geplanten Ablaufplan hinterlegten Arbeitsabläufen durchzuführen und sich einstellende Ergebnisgrößen mittels der Benutzerschnittstelle auszugeben. Hierzu kann das Planungssystem dazu eingerichtet sein, unter Verwendung von in der Speichereinheit hinterlegten topografischen Daten des zu bearbeitenden Feldes, auf welchem der für das Gespann zu planende Schwadprozess durchzuführen ist, und korrespondierenden feldspezifischen Parametern ein digitales Abbild des Feldes zu generieren und von den in der Speichereinheit hinterlegten gespannspezifischen Parametern ein digitales Abbild des zumindest einen autonomen Gespanns zu generieren, um mittels eines in der Speichereinheit hinterlegten mathematischen Modells die Durchführung des Schwadprozesses zu simulieren und auf Basis der Simulation den Ablaufplan zu generieren.

Des Weiteren kann das Planungssystem dazu eingerichtet sein, den durch die Simulation generierten Ablaufplan mittels der Benutzerschnittstelle, insbesondere visuell wahrnehmbar, auszugeben, wobei mittels der Benutzerschnittstelle nachträglich manuelle Änderungen von der Simulation zugrundeliegenden Randbedingungen durchführbar sind, wobei das Planungssystem dazu eingerichtet ist, die Simulation basierend auf den nachträglichen Änderungen erneut durchzuführen.

Bevorzugt kann das Planungssystem dazu eingerichtet sein, mittels der Simulation generierte Arbeitsabläufe des Schwadprozesses und die damit verbundenen Ergebnisgrößen mittels der Benutzerschnittstelle zu visualisieren. Ergebnisgrößen der Simulation sind unter anderem Ressourcenverbrauch, gefahrene Strecke, Arbeitszeit, Arbeitsbeginn und Arbeitsende, für das Durchfahren von Vorgewenden erforderliche Parameter, an die Feldgeometrie angepasste Fahrtrouten und/oder an einen vorangehenden oder nachfolgenden Arbeitsprozess angepasste oder davon abhängige Fahrtrouten. Für das Durchfahren von Vorgewenden erforderliche Parameter umfassen unter anderem einen räumlichen Versatz zu einer georeferenzierten Feldgrenze, eine Anzahl von parallel gestaffelten Vorgewendeabschnitten respektive Vorgewendesequenzen und/oder eine Arbeitsbreite.

Insbesondere kann das Planungssystem eine Routenplanungseinheit umfassen, die dazu eingerichtet ist, Fahrpuren einer Fahrtroute in Abhängigkeit von der Kontur des zu bearbeitenden Feldes zu bestimmen, wobei die Fahrtoute des zumindest einen autonomen Gespanns und die Schwadablage durch das Gespann in Abhängigkeit von einer Minimierung der Anzahl von Leerfahrten und Überfahrten einer den dem Schwadprozess nachfolgenden Arbeitsmaschine bestimmt wird. Eine dem Schwadprozess nachfolgende Arbeitsmaschine kann ein selbstfahrender Feldhäcksler, ein Ladewagen oder eine Ballenpresse sein.

Gemäß einer Weiterbildung kann das Planungssystem dazu eingerichtet sein, automatisch zu prüfen, ob der zumindest einen zur Bestimmung der Informationen und Umgebungsbedingungen eingerichteten Datenquelle aktualisierte Informationen und/oder Umgebungsbedingungen vorliegen, welche von den im Zeitpunkt der Generierung des Ablaufplanes verwendeten abweichen. Dies eröffnet dem Bediener des Planungssystems die Möglichkeit, den generierten Ablaufplan unter Berücksichtigung aktualisierter Informationen zum Erntegut und/oder aktualisierter Umgebungsbedingungen zu modifizieren. Ebenso kann eine bereits durchgeführte Simulation wegen einer Aktualisierung gespannspezifischer und/oder feldspezifischen Parameter, insbesondere automatisch, erneut durchgeführt oder vom Bediener manuell veranlasst werden.

Weiterhin kann das Planungssystem dazu eingerichtet sein, beim Vorliegen aktualisierter Informationen zum Erntegut und/oder Umgebungsbedingungen einen aktualisierten Ablaufplan automatisch zu erstellen und mittels der Benutzerschnittstelle zu visualisieren. Der Bediener des Planungssystems kann somit in die Lage versetzt werden, zu entscheiden, ob er mit dem aktualisierten Ablaufplan und den gegebenenfalls daraus resultierenden abweichenden Ergebnisgrößen einverstanden ist.

Des Weiteren kann das Planungssystem dazu eingerichtet sein, die zumindest eine Randbedingung zur Anpassung an den aktualisierten Ablaufplan dialogbasiert abzufragen und/oder zumindest einen Vorschlag für die zumindest eine an den aktualisierten Ablaufplan anzupassende Randbedingung auszugeben. Beispielsweise kann das Planungssystem eine abweichende Gespannkonstellation vorschlagen, welche besser an die aktualisierten Rahmenbedingungen angepasst ist.

Die vorliegende Erfindung wird nachstehend anhand eines in den Zeichnungen dargestellten Ausführungsbeispieles näher erläutert.

Es zeigen:
- Fig. 1: schematisch und exemplarisch eine vereinfachte Darstellung eines erfindungsgemäßen Planungssystems zur Generierung eines Ablaufplans zur Durchführung eines durch zumindest ein autonomes Gespann auszuführenden Schwadprozesses;
- Fig. 2: schematisch und exemplarisch eine vereinfachte Darstellung eines dem Schwadprozess vorbereitend vorangehenden Arbeitsprozesses und eines nachfolgend auszuführenden Arbeitsprozesses;
- Fig. 3: schematisch und exemplarisch das zumindest eine autonome Gespann zum Schwaden von abgemähtem Erntegut; und
- Fig. 4: exemplarisch unterschiedliche Vorschläge für von dem Planungssystem generierte Fahrtrouten.

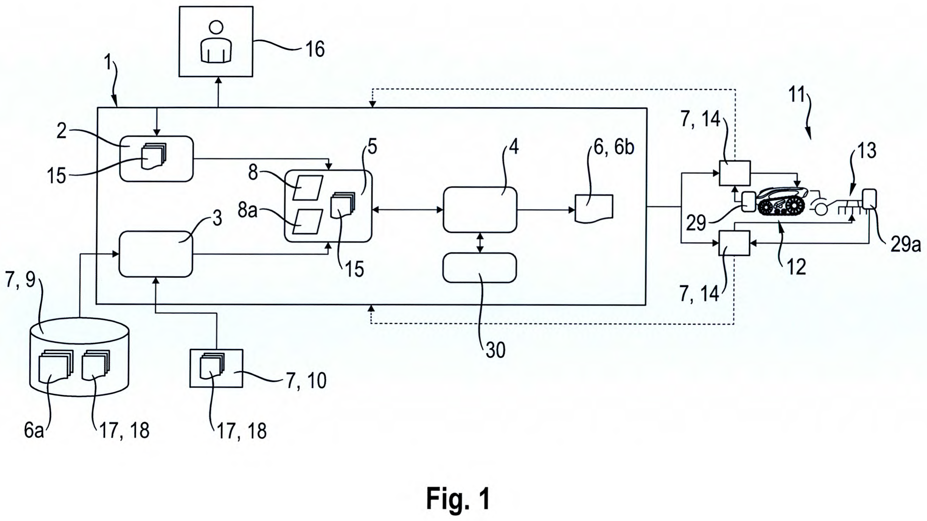

In Fig. 1 ist schematisch und exemplarisch eine vereinfachte Darstellung eines erfindungsgemäßen Planungssystems 1 dargestellt. Das Planungssystem 1 umfasst eine Benutzerschnittstelle 2, eine Kommunikationseinheit 3, eine Recheneinheit 4 und eine Speichereinheit 5. Das Planungssystem 1 ist dazu eingerichtet, zumindest einen Ablaufplan 6 zu generieren, welcher die zur Durchführung eines durch zumindest ein autonomes Gespann 11 aus einem Arbeitsfahrzeug 12 und wenigstens einer daran adaptierten Schwadvorrichtung 13 auszuführenden Schwadprozesses notwendigen Daten enthält. Das zumindest eine autonome Gespann 11 zeichnet sich dadurch aus, dass dieses dazu eingerichtet ist, selbsttätig und unbemannt den Schwadprozess auszuführen. Die Überwachung der Ausführung des Schwadprozesses durch das zumindest eine autonome Gespann 11 basiert auf an dem Gespann 11 angeordneten Sensoranordnung 29, 29a, die der Umfelderkennung dienen. Die an dem Gespann 11 angeordneten Sensoranordnungen 29, 29a können mehrere, nach unterschiedlichen Wirkprinzipien arbeitende Vorrichtungen aufweisen, die zur Umfelderkennung eingerichtet sind.

Beispielsweise kann die frontseitig an dem Arbeitsfahrzeug 12 angeordnete Sensoranordnung 29 eine Bilderfassungsvorrichtung umfassen. Die Bilderfassungsvorrichtung ist dazu ausgeführt, eine digitale Abbildung eines in Fahrrichtung FR gesehen im Vorfeld liegenden Umgebungsbereiches des Arbeitsfahrzeugs 12 zu erfassen. Diese Bilderfassungsvorrichtung kann als Kameravorrichtung ausgebildet sein. Die digitale Abbildung kann ein digitales Bild und/oder eine Sequenz von digitalen Bildern bezüglich des Umgebungsbereiches des Arbeitsfahrzeugs 12 aufweisen. Die von der Bilderfassungsvorrichtung der Sensoranordnung 29 erzeugten digitalen Bilder oder Bildersequenzen werden an eine Steuereinheit 14 des Arbeitsfahrzeugs 12 übertragen. Die Steuereinheit 14 umfasst ein Bildauswertungsmodul, welches dazu vorgesehen und eingerichtet ist, basierend auf der digitalen Abbildung des Umgebungsbereiches Informationen 17 zum Erntegut 20 sowie Umgebungsbedingungen 18 zu ermitteln.

Das Planungssystem 1 ist als eine von dem zumindest einen autonomen Gespann 11 unabhängige Datenverarbeitungsvorrichtung ausgeführt. Das Planungssystem 1 kann mittels der Kommunikationseinheit 3 den generierten Ablaufplan 6 an die zumindest eine Steuereinheit 14 des zumindest einen autonomen Gespanns 11 übertragen. Die Übertragung des generierten Ablaufplanes 6 durch die Kommunikationseinheit 3 erfolgt bevorzugt drahtlos. Bevorzugt weisen das Arbeitsfahrzeug 12 und die wenigstens eine daran adaptierte Schwadvorrichtung 13 des autonomen Gespanns 11 jeweils eine Steuereinheit 14 auf. Die an der Schwadvorrichtung 13 angeordneten Sensoranordnungen 29a stehen bevorzugt mit der Steuereinheit 14 der Schwadvorrichtung 13 in Verbindung. Die Steuereinheit 14 der Schwadvorrichtung 13 umfasst ebenfalls ein Auswertungsmodul, welches, in Abhängigkeit von der Ausführung und der Wirkungsweise der Sensoranordnungen 29a, dazu ausgeführt und eingerichtet ist, Informationen 17 zum Erntegut 20 sowie Umgebungsbedingungen 18 zu bestimmen.

Das Planungssystem 1 ist dazu eingerichtet, zur Generierung des Ablaufplanes 6 die Benutzerschnittstelle 2 anzusteuern, um dialogbasierend zumindest eine vorgebbare Randbedingung 15 für den zu planenden Schwadprozess zu bestimmen. Die zumindest eine Randbedingung 15 ist mittels Eingabe und/oder Auswahl durch die Benutzerschnittstelle 2 vorgebbar. Hier kann ein Bediener 16 des Planungssystems 1 durch die Benutzerschnittstelle 2 interaktiv die zumindest eine vorgebbare Randbedingung 15 eingeben und/oder aus in der Speichereinheit 5 abrufbar hinterlegten unterschiedlichen Randbedingungen 15 auswählen.

Weiterhin ist das Planungssystem 1 dazu eingerichtet, die Kommunikationseinheit 3 anzusteuern, um Informationen 17 zum durch den zu planenden Schwadprozess zu bearbeitenden Erntegut sowie Umgebungsbedingungen 18 von zumindest einer zur Bereitstellung der Informationen 17 und Umgebungsbedingungen 18 eingerichteten Datenquelle 7 abzufragen.

Die Recheneinheit 4 ist dazu eingerichtet, durch Ausführung zumindest eines in der Speichereinheit 5 hinterlegten Algorithmus 8 den Ablaufplan 6 in Abhängigkeit von der zumindest einen vorgegebenen Randbedingung 15 sowie den abgefragten Informationen 17 und Umgebungsbedingungen 18 zu generieren und an das zumindest eine autonome Gespann 11 zu übertragen.

Die zumindest eine Datenquelle 7 kann bevorzugt eine Arbeitsmaschine 10 sein, die einen dem Schwadprozess vorangehenden Arbeitsprozess ausführt. Die den vorangehenden Arbeitsprozess ausführende Arbeitsmaschine 10 kann zumindest eine Sensoreinheit umfassen, durch welche Informationen 17 zum Erntegut sowie einer durch die Arbeitsmaschine 10 abgefahrenen Fahrtroute erfasst und bereitgestellt werden können. Die von der Arbeitsmaschine 10 bzw. von der zumindest einen Sensoreinheit der Arbeitsmaschine 10 bereitgestellten Informationen 17 und Umgebungsbedingungen 18 können vom Planungssystem 1 bei der Generierung des Ablaufplans 6 berücksichtigt werden.

Zusätzlich oder alternativ kann das Planungssystem 1 dazu eingerichtet sein, Informationen 17 zum Erntegut 20 und/oder Umgebungsbedingungen 18 von einem externen Datenverarbeitungssystem 9, insbesondere einem Farm-Managementsystem, als eine, insbesondere weitere, Datenquelle 7 abzurufen und zu empfangen.

Im Ablaufplan 6 enthaltende Einstellparameter für das zumindest eine autonome Gespann 11 sind unter anderem eine optimierte Fahrtroute 35, Fahrgassen, Fahrgeschwindigkeit, Einstellungen und Funktionen der Schwadvorrichtung 13, geplante Einsatzdauer und dergleichen.

Die Recheneinheit 4 ist zur Abarbeitung zumindest einer in der Speichereinheit 5 hinterlegten Vorschlagsroutine 8a eingerichtet. Die Vorschlagsroutine 8a generiert in Abhängigkeit von der zumindest einen vorgebbaren Randbedingung 15 sowie den Informationen 17 und Umgebungsbedingungen 18 zumindest eine durch die Benutzerschnittstelle 2 auswählbare Vorschlagssequenz. Die generierte Vorschlagssequenz umfasst eine optimierte Ablageposition eines durch das autonome Gespann 11 zu erzeugenden Schwads 24 und die hierfür erforderlichen optimierten Einstellparameter.

Die dialogbasierende Interaktion zwischen dem Planungssystem 1 und dem Bediener 16 mittels der Benutzerschnittstelle 2 ermöglicht es auf einfache Weise, die zumindest eine Randbedingung 15 zu bestimmen, die in dem zu generierenden Ablaufplan 6 berücksichtigt werden soll.

Bei der zumindest einen Randbedingung 15, die vom Bediener 16 des Planungssystems 1 vorgegeben wird, kann es sich beispielsweise um die geplante spätere Verwendung des durch das autonome Gespann 11 zu erzeugenden Schwads 24, beispielsweise das Einbringen des durch einen selbstfahrenden Feldhäcksler als Arbeitsmaschine 25 aufgenommenen und auf einen Ladewagen überladenen Schwads 24 in ein Silo oder die Erzeugung von Erntegutballen mittels einer Ballenpresse, und/oder die Art und Arbeitsweise der für den späteren Verwendungszweck zum Einsatz kommenden Arbeitsmaschine handeln.

Ein weiterer Aspekt besteht in einer Vorauswahl der Zusammensetzung des zumindest einen autonomen Gespanns 11 durch das Planungssystem 1. Das Planungssystem 1 kann hierzu einen Vorschlag unterbreiten, welches autonome Arbeitsfahrzeug 12 und/oder welche Schwadvorrichtung 13 in Abhängigkeit bzw. unter Berücksichtigung von der zumindest einen Randbedingung 15, den Informationen 17 und den Umgebungsbedingungen 18 sinnvollerweise einsetzbar ist bzw. ein optimales Ergebnis bei der Erzeugung des Schwads 24 erwarten lässt.

Alternativ oder zusätzlich kann die zumindest eine Randbedingung 15 weiterhin die zu erzielende Qualität bzw. der Energiegehalt, die Lage des zu erzeugenden Schwads 24 auf dem zu bearbeitenden Feld 19 und/oder die Geometrie des durch das Gespann 11 zu erzeugenden Schwads 24 sein, die mittels der Benutzerschnittstelle 2 durch den Bediener 16 vorgebbar ist bzw. sind.

Weiterhin kann die zumindest eine Randbedingung 15 die Minimierung der Anzahl an Leerfahrten und/oder Überfahrten durch nachfolgende Arbeitsmaschinen und/oder eine spezifische Funktionalität der Schwadvorrichtung 13 wie die Teleskopierbarkeit von Schwadkreiseln der Schwadvorrichtung 13 sein.

Informationen 17 zum durch den zu planenden Schwadprozess zu bearbeitenden Erntegut 20, die durch die zumindest eine Datenquelle 7 bereitgestellt werden, können aktueller Ertrag, Feuchtigkeit, Verschmutzungsgrad und/oder Inhaltsstoffe des zum Schwad 24 zu formenden abgemähten Erntegutes 23 und/oder die Halmausrichtung des abgemähten Erntegutes 23 auf dem zu bearbeitenden Feld 19 sein. Insbesondere die durch die Kommunikationseinheit 3 aus der wenigstens einen Datenquelle 7 abgerufenen Inhaltsstoffe des zum Schwad 24 zu formenden Erntegutes 23 und/oder die Halmausrichtung des abgemähten Erntegutes 23 auf dem zu bearbeitenden Feld 19 können von dem Planungssystem 1 verwendet werden, um eine optimierte Ablageposition vorzuschlagen. Eine dem Vorschlag zur Ablageposition des Schwads 24 zugrundeliegende Zielstellung ist dabei, einen möglichst homogenen Schwad 24 zu erzeugen.

Umgebungsbedingungen 18 können Wetterdaten, topografische Daten des zu bearbeitenden Feldes 19, bereits bestehende Fahrtrouten und/oder Ertragsdaten für das Erntegut 20 des zu bearbeitenden Feldes 19 sein.

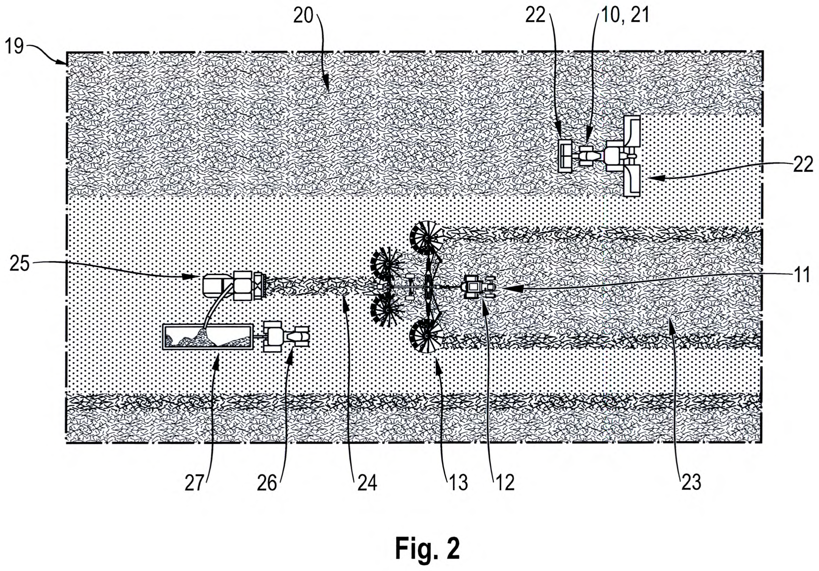

Die Darstellung in Fig. 2 zeigt schematisch und exemplarisch eine vereinfachte Darstellung eines dem Schwadprozess vorbereitend vorangehenden Arbeitsprozesses und eines nachfolgend auszuführenden Arbeitsprozesses.

Der dem Schwadprozess vorbereitend vorangehende Arbeitsprozess ist im dargestellten Ausführungsbeispiel das Mähen von Erntegut 20, insbesondere Futtererntegut, auf dem zu bearbeitenden Feld 19. Das Mähen wird durch eine als Traktor 21 ausgeführte Arbeitsmaschine 10 mit zumindest einem daran adaptierten Mähwerk 22 ausgeführt. Beispielhaft sind ein Frontmähwerk und ein Heckmähwerk als an den Traktor 21 adaptierte Mähwerke 22 vorgesehen. Mit 23 ist vom Mähwerk 22 abgemähtes Erntegut bezeichnet.

Ein weiterer dem Schwadprozess vorbereitend vorangehender Arbeitsprozess kann das Wenden von abgemähtem Erntegut 23 sein, welches durch eine weitere oder die Arbeitsmaschine 10 und einem daran adaptierten Wender durchgeführt wird.

Der Schwadprozess gemäß dem durch das Planungssystem 1 generierten Ablaufplan 6 wird durch das Gespann 11 ausgeführt. Die Schwadvorrichtung 13 kann, wie in Fig. 2 beispielhaft dargestellt, als Kreiselschwader ausgeführt sein. Von der Schwadvorrichtung 13 wird abgemähtes Erntegut 23 zu einem Schwad 24 zusammengeführt.

Der dem Schwadprozess nachfolgend auszuführende Arbeitsprozess wird im dargestellten Ausführungsbeispiel durch die als selbstfahrender Feldhäcksler ausgebildete Arbeitsmaschine 25 ausgeführt. Mittels einer Pick-Up nimmt der Feldhäcksler das zum Schwad 24 zusammengeführte abgemähte Erntegut 23 auf. Vom Feldhäcksler wird das verarbeitete abgemähte Erntegut 23 auf einen von einem Zugfahrzeug 26 gezogenen Transportwagen 27 überladen.

Die gemeinsame Darstellung des vorangehenden vorbereitenden Arbeitsprozesses, hier des Mähens, des Schwadprozesses und des nachfolgenden Arbeitsprozesses des Erntens dient lediglich der Veranschaulichung und ist dabei nicht auf eine zeitgleiche oder annähernd zeitgleiche Durchführung beschränkt. Zwischen den zumindest drei Arbeitsprozessen der Futtermittelernte können ebenso längere Zeiträume, z.B. größer als ein Tag, liegen, die sich beispielsweise aus der Dauer einer Abtrocknung des gemähten und anschließend zu Schwaden 24 zusammengeführten Erntegutes 23 ergeben können.

Das Planungssystem 1 ist dazu eingerichtet, auf wenigstens einen Ablaufplan 6a eines in der Vergangenheit liegenden Planungsvorgangs und/oder Daten zumindest einer in der Vergangenheit liegenden spezifischen Feldbearbeitung und/oder vollständigen Erntekampagne zuzugreifen und daraus eine Fahrtroute 35 für das zu bearbeitende Feld 19 sowie Einstellparameter abzuleiten, die eine optimierte und effiziente Durchführung des Schwadprozesses ermöglichen, und dem zu generierenden Ablaufplan 6 als Basisdaten zugrunde liegen. Der wenigstens eine historische Ablaufplan 6a kann bevorzugt aus der als externes Datenverarbeitungssystem 9 ausgeführten Datenquelle 7 abgerufen werden. Der wenigstens eine historische Ablaufplan 6a umfasst des Weiteren Einsatzdaten über das in der Vergangenheit auf dem zu bearbeitenden Feld 19 zum Einsatz gekommene Gespann 11 und dessen Zusammensetzung.

Dabei kann das Planungssystem 1 dazu eingerichtet sein, einen Abgleich mit der als externes Datenverarbeitungssystem 9 ausgeführten Datenquelle 7 durchzuführen, um zu verifizieren, ob das in der Vergangenheit verwendete Gespann 11 noch im Bestand befindlich und/oder im Ausführungszeitpunkt verfügbar ist.

Des Weiteren kann das Planungssystem 1 dazu eingerichtet sein, im Zeitpunkt der Generierung der Ablaufplanung 6 zu prüfen, ob ein alternatives und/oder geeigneteres Gespann 11 verfügbar ist, um den zu planenden Schwadprozess auszuführen.

Das Planungssystem 1 ist bevorzugt dazu eingerichtet, bei der Generierung des Ablaufplanes 6 die dem Schwadprozess vorbereitend vorangehenden und dem Schwadprozess nachfolgend auszuführenden Arbeitsprozesse zu berücksichtigen. Hierzu wird, wie weiter oben bereits ausgeführt, als zumindest eine Randbedingung 15 mittels des interaktiven, natürlichsprachigen Dialogs zwischen dem Bediener 16 und der Benutzerschnittstelle 2 die geplante spätere Verwendung des durch das Gespann 11 zu erzeugenden Schwads 24 und/oder die Art und Arbeitsweise der für den späteren Verwendungszweck zum Einsatz kommende Arbeitsmaschine handeln, vorgegeben.

Besonders vorteilhaft ist es, wenn das Planungssystem 1 dazu eingerichtet ist, Informationen 17 zum zu erntenden Erntegut 20 bzw. abgemähten Erntegut 23, jedoch vor der Durchführung des Schwadprozesses, von der zumindest einen einen vorangehenden Arbeitsprozess ausführenden Arbeitsmaschine 10 als eine Datenquelle 7 abzurufen und zu empfangen. Der Generierung des Ablaufplanes 6 durch das Planungssystem 1 können somit unter anderem Feuchtigkeit, Rohaschegehalt, Trockenmassegehalt, Zuckergehalt und/oder Ertrag als Informationen 17 zum Erntegut 20 bzw. 23 bereitgestellt werden. Diese Informationen 17 haben Einfluss auf die vom Ablaufplan 6 umfasste Fahrtroute 35 für das Gespann 11 sowie den Zeitpunkt der Ausführung des Schwadprozesses. Das Planungssystem 1 verwendet die bereitgestellten Informationen 17 zu Inhaltsstoffen des Erntegutes 20, um diese als Grundlage für die Schwadposition auf dem zu bearbeitenden Feld 19 zu verwenden, insbesondere mit dem Ziel, möglichst homogene Schwade 24 zu erzeugen.

Des Weiteren können diese Informationen 17 bei einer empfohlenen Abfolgeroute der einen nachfolgenden Arbeitsprozess ausführenden Arbeitsmaschine 25 wie dem Feldhäcksler oder die Ballenpresse berücksichtigt werden. Dazu kann die vom Ablaufplan 6 umfasste Fahrtoute 35 des Schwadprozesses in der Weise geplant werden, dass zum Ausgleich von Feuchtigkeitsdifferenzen im abgemähten Erntegut 23 dieses möglichst homogen gemischt werden. Eine weitere Option besteht darin, dass die vom Ablaufplan 6 umfasste Fahrtroute 35 des zumindest einen autonomen Gespanns 11 zur Steuerung der Abtrocknung auf einem zu bearbeitenden Feld 19 mit großer Fläche berücksichtigt, in welcher Abfolge das abgemähte Erntegut 23 bereits abgetrocknet ist. So kann in den Bereichen trockeneren Erntegutes 23 mit der Schwadbildung begonnen werden, während in Bereichen mit feuchterem Erntegut 23 die Schwadbildung später beginnt, um diesen Bereichen mehr Zeit zur Abtrocknung des Erntegutes 23 zu geben.

Insbesondere kann das Planungssystem 1 dazu eingerichtet sein, aktuelle Informationen 17 zum abgemähten Erntegut 23 und/oder zu bestehenden Umgebungsbedingungen 18 unmittelbar von den dem zumindest einen autonomen Gespann 11 zugeordneten Steuereinheiten 14 zu empfangen und auszuwerten.

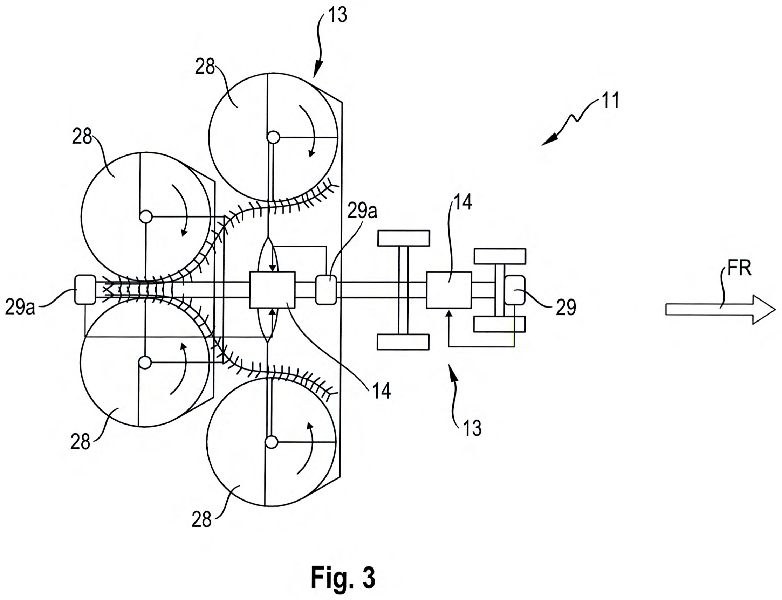

Fig. 3 zeigt schematisch und exemplarisch das autonome Gespann 11 zum Schwaden des abgemähten Erntegutes. Die Schwadvorrichtung 13 ist beispielhaft als Vierkreiselschwader ausgeführt. Zum Bilden des Schwads 24 weist die Schwadvorrichtung 13 vier Schwadkreisel 28 auf. Das autonome Gespann 11 weist die zumindest eine Sensoranordnung 29 auf, die dazu vorgesehen und eingerichtet ist, eine Information 17 des abgemähten Erntegutes 23 bezüglich des mittels der Schwadvorrichtung 13 erzeugten Schwads 24 zu detektieren. Zusätzlich oder alternativ können das Arbeitsfahrzug 12 und/oder die Schwadvorrichtung 13 des Gespanns 11 weitere Sensoranordnungen 29, 29a aufweisen, die dazu vorgesehen und eingerichtet ist, mindestens eine bestehende Umgebungsbedingung 18 bezüglich des zu bearbeitenden Feldes 19, welches bezüglich einer Fahrtrichtung FR des autonomen Gespanns 11 vor dem Arbeitsfahrzeug 12 und/oder vor der Schwadvorrichtung 13 positioniert ist, zu detektieren. Darüber hinaus ermöglicht eine weitere Sensoranordnung 29, 29a, bei geeigneter Anordnung an dem Arbeitsfahrzeug 12 und/oder der Schwadvorrichtung 13, eine Information 17 des abgemähten Erntegutes 23, welches bezüglich der Fahrtrichtung FR des autonomen Gespanns 11 vor dem Arbeitsfahrzeug 12 und/oder vor der Schwadvorrichtung 3 positioniert ist, zu detektieren.

Ein weiterer Aspekt besteht in einer Simulation des durchzuführenden Schwadprozesses. Das Planungssystem 1 ist dazu eingerichtet, eine Simulation von in dem geplanten Ablaufplan 6 hinterlegten Arbeitsabläufen durchzuführen und sich einstellende Ergebnisgrößen mittels der Benutzerschnittstelle 2 auszugeben. Hierzu kann unter Verwendung von in der Speichereinheit 5 hinterlegten oder hinterlegbaren topografischen Daten des zu bearbeitenden Feldes 19, auf welchem der zu planende Schwadprozess durchzuführen ist, und korrespondierender feldspezifischer Parameter ein digitales Abbild des Feldes 19 generiert werden. Zudem kann unter Verwendung von in der Speichereinheit 5 hinterlegten oder hinterlegbaren Daten ein digitales Abbild des Arbeitsfahrzeugs 12 und der zumindest einen daran adaptierten Schwadvorrichtung 13 generiert werden, um mittels eines in der Speichereinheit 5 hinterlegten mathematischen Modells die Durchführung des Schwadprozesses zu simulieren und auf Basis der Simulation den Ablaufplan 6 zu generieren. Das mathematische Modell kann dabei eine Unterroutine des Algorithmus 8 sein.

In der Simulation der Durchführung des Schwadprozesses findet die zumindest eine Randbedingung 15 ebenso Eingang wie die abgerufenen Informationen zum Erntegut 20 und die Umgebungsbedingungen 18. Die zumindest eine Randbedingung 15 wird im interaktiven, natürlichsprachigen Dialog mit dem Bediener 16 abgefragt. Die Informationen 17 zum Erntegut 20 bzw. 23 und die Umgebungsbedingungen 18 basieren auf historischen Daten und/oder Prognosen, die durch die zumindest eine Datenquelle 7 bereitgestellt bzw. von dieser abgerufen werden.

Das Planungssystem 1 ist dazu eingerichtet, den durch die Simulation generierten Ablaufplan 6 des Schwadprozesses und die damit verbundene Ergebnisgrößen, insbesondere Ressourcenverbrauch, gefahrene Strecke, Arbeitszeit, Arbeitsbeginn und Arbeitsende, für das Durchfahren von Vorgewenden erforderliche Parameter, die an die Feldgeometrie angepasste Fahrtroute 35 und/oder die an einen vorangehenden oder nachfolgenden Arbeitsprozess angepasste oder davon abhängige Fahrtroute 35 mittels der Benutzerschnittstelle 2 zu visualisieren.

Weiterhin ist das Planungssystem 1 dazu eingerichtet, dass mittels der Benutzerschnittstelle 2 nachträglich manuelle Änderungen von der zumindest einen der Simulation zugrundeliegenden Randbedingung 15 durchführbar sind, wobei das Planungssystem 1 dazu eingerichtet ist, die Simulation basierend auf den nachträglichen Änderungen erneut durchzuführen. Somit kann der Bediener 16 neue Szenarien der Durchführung des Schwadprozesses simulieren, wenn aus dessen Sicht die Ergebnisgrößen nicht seiner Erwartung entsprechen.

Hierzu kann das Planungssystem 1 dazu eingerichtet sein, den generierten Ablaufplan 6 vor der Durchführung des geplanten Schwadprozesses, insbesondere innerhalb eines vorgebbaren zeitlichen Abstands vor der Durchführung, mittels der Benutzerschnittstelle 2 zu visualisieren.

Des Weiteren kann das Planungssystem 1 eine Routenplanungseinheit 30 umfassen, die dazu eingerichtet ist, Fahrpuren für die zumindest eine Fahrtroute 35 in Abhängigkeit von der Kontur des zu bearbeitenden Feldes 19 zu bestimmen. Die zumindest eine Fahrtoute 35 des Gespanns 11 und die Schwadablage durch das Gespann 11 während des Schwadprozesses werden in Abhängigkeit von einer Minimierung der Anzahl von Leerfahrten und Überfahrten einer den dem Schwadprozess nachfolgenden Arbeitsmaschine 25 wie dem Feldhäcksler, einem Ladewagen oder der Ballenpresse bestimmt.

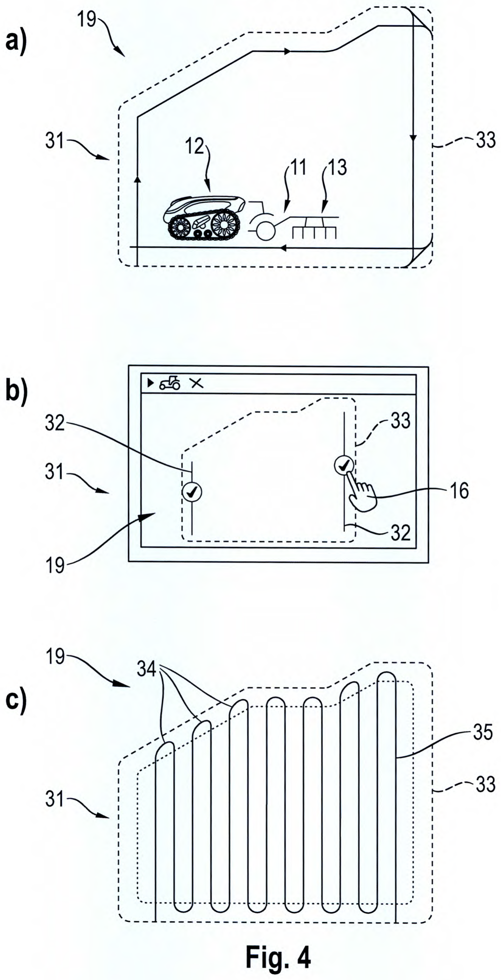

In Fig. 4 sind exemplarisch unterschiedliche Vorschläge 31 für eine von dem Planungssystem 1 generierte Fahrtroute 35 dargestellt. Die Routenplanungseinheit 30 des Planungssystems 1 führt eine Planungsroutine aus, in der die Routenplanungseinheit 30 aus der zumindest einen Randbedingung 15, den Informationen 17 und Umgebungsbedingungen 18 die mehrere Vorschläge 31 umfassende Vorschlagssequenz für die zumindest eine optimierte Fahrtroute 35 für das den Schwadprozess durchführende autonome Gespann 11 erzeugt.

Die Vorschläge 31 können die zumindest eine optimierte eine Fahrtroute 35 des autonomen Gespanns 11 betreffen. Insbesondere können die Vorschläge 31 Änderungen von Referenzlinien 33 und/oder Vorgewendefahrtrouten 34 und/oder eine Aufteilung des Feldes 19 in Teilfelder mit unterschiedlichen Referenzlinien 33 und/oder unterschiedlichen optimierten Fahrtrouten 35 betreffen.

Fig. 4a) zeigt beispielsweise Feldgrenzen, die aus Umgebungsbedingungen 18 bestimmt wurden, die aus der wenigstens einen Datenquelle 7 abgerufen wurden. Beispielsweise können Feldgrenzen erkannt werden, nachdem das Feld 19 in einem vorangehenden Arbeitsprozess von der diesen vorangehenden Arbeitsprozess ausführenden Arbeitsmaschine 10 als Datenquelle 7 einmal umrundet wurde. Alternativ können bestehende Feldgrenzen aus einer Datenbank der externen Datenverarbeitungsvorrichtung 9 als Datenquelle 7 abgerufen werden.

In Fig. 4b) beispielsweise wurden zwei Teilfahrtrouten 32 vorgeschlagen. Dazu kann das Planungssystem 1 eine natürlichsprachige Erklärung liefern und mittels der Benutzerschnittstelle 2 visualisiert ausgeben. Der Bediener 16 kann auswählen, ob diese Teilfahrtrouten 32 korrekt erkannt wurden und so verwendet werden sollen, um daraus in Kombination mit den Feldgrenzen in Fig. 4a) die in Fig. 4c) dargestellte Fahrtroute 35 und die damit verbundene Schwadablageposition zu planen.

Das Planungssystem 1 ist dazu eingerichtet, automatisch zu prüfen, ob der zumindest einen zur Bestimmung der Informationen 17 und Umgebungsbedingungen 18 eingerichteten Datenquelle 7 aktualisierte Informationen 17 und/oder Umgebungsbedingungen 18 vorliegen, welche von den im Zeitpunkt der Generierung des Ablaufplanes 6 verwendeten abweichen.

Bevorzugt kann das Planungssystem 1 dazu eingerichtet sein, beim Vorliegen aktualisierter Informationen 17 zum Erntegut 20 und/oder bestehender oder prognostizierter Umgebungsbedingungen 18 einen aktualisierten Ablaufplan 6b automatisch zu erstellen und mittels der Benutzerschnittstelle 2 zu visualisieren.

Insbesondere kann das Planungssystem 1 dazu eingerichtet sein, die zumindest eine Randbedingung 15 zur Anpassung an den aktualisierten Ablaufplan 6b dialogbasiert abzufragen und/oder zumindest einen Vorschlag für die zumindest eine an den aktualisierten Ablaufplan 6b anzupassende Randbedingung 15 auszugeben.

Alternativ kann das Planungssystem 1 dazu eingerichtet sein, nach einer Simulation unter Verwendung der vom Bediener 16 vorgegebenen zumindest einen Randbedingung 15 wenigstens einen Vorschlag für von der zumindest einen dem Bediener 16 vorgegebenen Randbedingung 15 abweichenden Randbedingung 15 zu unterbreiten, die aufgrund von in der Speichereinheit 5 abrufbar hinterlegtem Expertenwissen durch das mathematische Modell zur Simulation des Schwadprozesses erstellt wird. Hierdurch kann der Bediener 16 auf mögliche Optimierungspotentiale hingewiesen werden.

Gemäß einer bevorzugten Weiterbildung kann das Planungssystem 1 dazu eingerichtet sein, bei einem zeitgleichen Einsatz von zumindest zwei autonomen Gespannen 11 zum Erzeugen von Einzelschwaden 24 entlang der gemeinsamen Fahrtroute 35, Teilfahrtrouten in Abhängigkeit von einer durch Zusammenfassen der Einzelschwaden 24 gebildeten Gesamtschwadposition aufeinander abzustimmen.

Hierbei kann das Planungssystem 1 dazu eingerichtet sein, die Lage der Gesamtschwadposition vorzuschlagen und mittels der Benutzerschnittstelle 2 auszugeben. Hierzu kann die Benutzerschnittstelle 2 dazu eingerichtet sein, Eingaben des Bedieners 16 zur Veränderung der vorgeschlagenen Lage der Gesamtschwadposition umzusetzen. Die Eingabe zur Umsetzung einer Veränderung der vorgeschlagenen Lage der Gesamtschwadposition durch den Bediener 16 kann bevorzugt mittels einer berührungssensitive Bildschirmoberfläche der Benutzerschnittstelle 2 erfolgen. Der Bediener 16 kann dabei die visualisierte vorgeschlagene Lage der Gesamtschwadposition durch Verschieben verändern.

Weiterhin kann das Planungssystem 1 dazu eingerichtet sein, einen Ressourcenverbrauch in Abhängigkeit von der jeweiligen ausgewählten und/oder eingestellten Lage der Gesamtschwadposition auszugeben. Der Bediener 16 des Planungssystems 1 kann somit unmittelbar die Auswirkungen der manuellen Änderung der Lage der Gesamtschwadposition von einer vorschlagsgemäßen Lage erkennen. Diese Änderung durch den Bediener 16 kann insbesondere auch durch die vorgesehene Simulation des Schwadprozesses berücksichtigt werden.

### Bezugszeichenliste

| | | | |
|---|---|---|---|
| 1 | Planungssystem | 30 | Routenplanungseinheit |
| 2 | Benutzerschnittstelle | 31 | Vorschlag |
| 3 | Kommunikationseinheit | 32 | Teilfahrtroute |
| 4 | Recheneinheit | 33 | Referenzlinie |
| 5 | Speichereinheit | 34 | Vorgewendefahrtroute |
| 6 | Ablaufplan | 35 | Fahrtroute |
| 6a | Ablaufplan | | |
| 6b | Ablaufplan | FR | Fahrtrichtung |
| 7 | Datenquelle | | |
| 8 | Algorithmus | | |
| 8a | Vorschlagsroutine | | |
| 9 | Datenverarbeitungssystem | | |
| 10 | Arbeitsmaschine | | |
| 11 | Gespann | | |
| 12 | Arbeitsfahrzeug | | |
| 13 | Schwadvorrichtung | | |
| 14 | Steuereinheit | | |
| 15 | Randbedingung | | |
| 16 | Bediener | | |
| 17 | Information | | |
| 18 | Umgebungsbedingung | | |
| 19 | Feld | | |
| 20 | Erntegut | | |
| 21 | Traktor | | |
| 22 | Mähwerk | | |
| 23 | Abgemähtes Erntegut | | |
| 24 | Schwad | | |
| 25 | Arbeitsmaschine | | |
| 26 | Zugfahrzeug | | |
| 27 | Transportwagen | | |
| 28 | Schwadkreisel | | |
| 29 | Sensoranordnung | | |
| 29a | Sensoranordnung | | |

## Patentansprüche

1. Planungssystem (1), welches zur Generierung eines Ablaufplanes (6) zur Durchführung eines durch zumindest ein autonomes Gespann (11) aus einem autonomen Arbeitsfahrzeug (12) und wenigstens einer daran adaptierten Schwadvorrichtung (13) auszuführenden Schwadprozesses eingerichtet ist, wobei das Planungssystem (1) eine Benutzerschnittstelle (2), eine Kommunikationseinheit (3), eine Recheneinheit (4) und eine Speichereinheit (5) umfasst, **dadurch gekennzeichnet, dass** das Planungssystem (1) dazu eingerichtet ist, zur Generierung des Ablaufplanes (6) die Benutzerschnittstelle (2) anzusteuern, um dialogbasierend zumindest eine vorgebbare Randbedingung (15) für den prädiktiv zu planenden Schwadprozess zu bestimmen, sowie die Kommunikationseinheit (3) anzusteuern, um Informationen (17) zum durch den zu planenden Schwadprozess zu bearbeitenden Erntegut (20, 23) sowie Umgebungsbedingungen (18) von zumindest einer zur Bereitstellung der Informationen (17) und Umgebungsbedingungen (18) eingerichteten Datenquelle (7) abzufragen, wobei die Recheneinheit (4) dazu eingerichtet ist, durch Ausführung zumindest eines in der Speichereinheit (5) hinterlegten Algorithmus (8) den Ablaufplan (6) in Abhängigkeit von der zumindest einen vorgegebenen Randbedingung (15) sowie den abgefragten Informationen (17) und Umgebungsbedingungen (18) zu generieren und an das zumindest eine autonome Gespann (11) zu übertragen.

2. Planungssystem (1) nach Anspruch 1, **dadurch gekennzeichnet, dass** die Recheneinheit (4) zur Abarbeitung zumindest einer in der Speichereinheit (5) hinterlegten Vorschlagsroutine (8a) eingerichtet ist, welche in Abhängigkeit von der zumindest einen vorgebbaren Randbedingung (15) sowie den Informationen (17) und Umgebungsbedingungen (18) zumindest eine durch die Benutzerschnittstelle (2) auswählbare Vorschlagssequenz für eine optimierte Ablageposition eines Schwads (24) durch das zumindest eine autonome Gespann (11) und die hierfür erforderlichen optimierten Einstellparameter generiert.

3. Planungssystem nach Anspruch 1 oder 2, **dadurch gekennzeichnet, dass** das Planungssystem (1) dazu eingerichtet ist, auf wenigstens einen Ablaufplan (6a) eines in der Vergangenheit liegenden Planungsvorgangs und/oder Daten zumindest einer in der Vergangenheit liegenden spezifischen Feldbearbeitung und/oder vollständigen Erntekampagne zuzugreifen und dem zu generierenden Ablaufplan (6) als Basisdaten zugrunde zu legen.

4. Planungssystem nach einem der Ansprüche 1 bis 3, **dadurch gekennzeichnet, dass** das Planungssystem (1) dazu eingerichtet ist, bei der Generierung des Ablaufplanes (6) dem Schwadprozess vorbereitend vorangehende und dem Schwadprozess nachfolgend auszuführende Arbeitsprozesse zu berücksichtigen.

5. Planungssystem (1) nach Anspruch 4, **dadurch gekennzeichnet, dass** das Planungssystem (1) dazu eingerichtet ist, Informationen (17) und/oder Umgebungsbedingungen (18) von zumindest einer einen vorangehenden Arbeitsprozess ausführenden bemannten und/oder autonomen Arbeitsmaschine (10) als eine Datenquelle (7) abzurufen und zu empfangen.

6. Planungssystem (1) nach Anspruch 4 oder 5, **dadurch gekennzeichnet, dass** das Planungssystem (1) dazu eingerichtet ist, Informationen (17) zum Erntegut (20, 23) und/oder Umgebungsbedingungen (18) von einem externen Datenverarbeitungssystem (9), insbesondere einem Farm-Managementsystem, als eine Datenquelle (7) abzurufen und zu empfangen.

7. Planungssystem (1) nach einem der Ansprüche 4 bis 6, **dadurch gekennzeichnet, dass** das Planungssystem (1) dazu eingerichtet ist, Informationen (17) zum Erntegut (20, 23) und/oder Umgebungsbedingungen (18) von zumindest einer dem autonomen Gespann (11) zugeordneten Sensoranordnung (29, 29a) zu empfangen und auszuwerten.

8. Planungssystem (1) nach einem der vorangehenden Ansprüche, **dadurch gekennzeichnet, dass** das Planungssystem (1) dazu eingerichtet ist, bei einem zeitgleichen Einsatz von zumindest zwei autonomen Gespannen (11) zum Erzeugen von Einzelschwaden entlang einer gemeinsamen Fahrtroute (35), Teilfahrtrouten in Abhängigkeit von einer durch Zusammenfassen der Einzelschwaden gebildeten Gesamtschwadposition aufeinander abzustimmen.

9. Planungssystem (1) nach Anspruch 8, **dadurch gekennzeichnet, dass** das Planungssystem (1) dazu eingerichtet ist, die Lage der Gesamtschwadposition vorzuschlagen und mittels der Benutzerschnittstelle (2) auszugeben, wobei die Benutzerschnittstelle (2) dazu eingerichtet ist, Eingaben eines Bedieners (16) zur Veränderung der vorgeschlagenen Lage der Gesamtschwadposition umzusetzen.

10. Planungssystem (1) nach Anspruch 9, **dadurch gekennzeichnet, dass** das Planungssystem (1) dazu eingerichtet ist, einen Ressourcenverbrauch in Abhängigkeit von der jeweiligen ausgewählten und/oder eingestellten Lage der Gesamtschwadposition auszugeben.

11. Planungssystem (1) nach einem der vorangehenden Ansprüche, **dadurch gekennzeichnet, dass** das Planungssystem (1) dazu eingerichtet ist, eine Simulation von in dem geplanten Ablaufplan (6) hinterlegten Arbeitsabläufen durchzuführen und sich einstellende Ergebnisgrößen mittels der Benutzerschnittstelle (2) auszugeben.

12. Planungssystem (1) nach Anspruch 11, **dadurch gekennzeichnet, dass** das Planungssystem (1) dazu eingerichtet ist, den durch die Simulation generierten Ablaufplan (6) mittels der Benutzerschnittstelle (2), insbesondere visuell wahrnehmbar, auszugeben, wobei mittels der Benutzerschnittstelle (2) nachträglich manuelle Änderungen von der Simulation zugrundeliegenden Randbedingungen (15) durchführbar sind, wobei das Planungssystem (1) dazu eingerichtet ist, die Simulation basierend auf den nachträglichen Änderungen erneut durchzuführen.

13. Planungssystem (1) nach einem der vorangehenden Ansprüche, **dadurch gekennzeichnet, dass** das Planungssystem (1) eine Routenplanungseinheit (30) umfasst, die dazu eingerichtet ist, Fahrpuren einer Fahrtroute (35) in Abhängigkeit von der Kontur des zu bearbeitenden Feldes (19) zu bestimmen, wobei die Fahrtoute (35) des zumindest einen autonomen Gespanns (11) und die Schwadablage durch das Gespann (11) in Abhängigkeit von einer Minimierung der Anzahl von Leerfahrten und Überfahrten einer den dem Schwadprozess nachfolgenden Arbeitsmaschine (25) bestimmt wird.

14. Planungssystem (1) nach einem der vorangehenden Ansprüche, **dadurch gekennzeichnet, dass** das Planungssystem (1) dazu eingerichtet ist, automatisch zu prüfen, ob der zumindest einen zur Bestimmung der Informationen (17) und Umgebungsbedingungen (18) eingerichteten Datenquelle (7) aktualisierte Informationen (17) und/oder Umgebungsbedingungen (18) vorliegen, welche von den im Zeitpunkt der Generierung des Ablaufplanes (6) verwendeten abweichen.

15. Planungssystem (1) nach Anspruch 14, **dadurch gekennzeichnet, dass** das Planungssystem (1) dazu eingerichtet ist, beim Vorliegen aktualisierter Informationen (17) zum Erntegut (20, 23) und/oder Umgebungsbedingungen (18) einen aktualisierten Ablaufplan (6b) automatisch zu erstellen und mittels der Benutzerschnittstelle (2) zu visualisieren.
